# EUROPEAN PATENT SPECIFICATION

(11) **EP 2 378 313 B1**
(45) Date of publication and mention of the grant of the patent: **25.09.2013**
(21) Application number: 10425117.8
(22) Date of filing: 13.04.2010
(51) Int. Cl.: G01T 1/29

(54) **Radiological image reading unit**
Radiologisches Bildlesegerät
Dispositif de lecture d'image radiologique

(43) Date of publication of application: 19.10.2011
(73) Proprietor: Nical S.p.A., 20126 Milano (IT)
(72) Inventor: Niccollucci, Roberto, 20124 Milano (IT)
(74) Representative: Lunati & Mazzoni S.r.L.

(56) References cited:
- EP-A2- 0 863 657
- EP-A2- 1 798 576
- US-A- 4 739 168
- US-A- 5 874 744
- US-A1- 2001 011 714
- US-A1- 2002 056 817
- US-A1- 2005 274 917
- US-A1- 2008 078 964
- US-B1- 6 476 407

## Description

The present invention relates to a radiological unit of the type pointed out in the preamble of the first claim.

In particular, the unit is adapted to be used in the human and animal radiology department and, in particular, during a radiographic examination in which it is provided a first step of exposing a "plate" for obtaining a diagnostic image and a subsequent step of developing said image.

It is known that presently the main components that are required for carrying out a radiographic examination are: a source of rays, usually X-rays, a developing machine and a plate adapted to be exposed to said rays.

In particular, the plate usually consists of a sheet/film sensitive to the X-rays and is enclosed in an appropriate metal container, referred to as radiographic cassette. The radiographic examination is usually performed in the following manner.

First of all, the radiographic cassette is positioned in a suitable housing provided in the bed on which the patient will be arranged.

At the beginning the patient takes a seat on said bed and the body portion to be analysed is placed close to the plate.

Then the X-ray source is activated, and once said X-rays have passed through the patient's body the plate is exposed, so that the diagnostic image is obtained.

In particular, after passing through the patient, the X-ray beam hits the sheet the material of which, being sensitive to the X-rays, is exposed.

The radiographic cassette is then manually pulled out of the bed, transferred to suitable developing machines and introduced thereinto.

At this point, the developing machine automatically carries out extraction of the plate from the radiographic cassette and reading thereof, the plate being then put back at the inside of the cassette.

In particular the plate, once extracted from the cassette, is struck by a light beam, such as a laser, and then emits a plurality of particles, photons for example, which are collected by a suitable element. Based on said particles, the radiographic image is then rebuilt.

It is important to point out that during the reading process the formed diagnostic image is removed from the previously exposed plate and then as soon as the cassette comes out of the machine its reuse becomes possible.

According to the radiographic examination technique used, the plate can be made in a different manner, For instance, in place of the sheet, the CR (Computed Radiography) technology utilises the imaging plate, called IP, i.e. a high-sensitivity detector consisting of a matrix of photo-stimulable phosphorus materials.

The above mentioned known art has some important drawbacks.

In fact the plate, due to the continuous movement both of the plate itself and of the cassette, is submitted to scratches and deterioration in general so that the examination qualities will be degraded.

For the above reason the plate needs to be frequently replaced which will give rise to an increase in costs.

A further problem is due to the process slowness caused by the excessive duration of the idle times, i.e. due to the necessity of handling the cassette moving it between different places.

In addition, the developing machines are characterised by a great bulkiness and high costs.

Therefore, use of plates of high quality is very expensive and will bring to too high costs for the examinations themselves.

There are finally other techniques used for radiographic examinations, such as the flat panel for example, and such as the systems describes in patent applications US-A-5874744, US-A-2008/078964 and US-A-2001/011714. In this case a particular plate is used which comprises complicated electronic elements adapted to analyse the diagnostic image and directly convert it into a digital image.

These systems are not of great use due to the high accomplishment and servicing costs.

Under this situation the technical task underlying the present invention is to devise a radiological unit capable of substantially obviating the mentioned drawbacks. Within the scope of this technical task it is an important aim of the invention to devise a unit limiting deterioration of the plates.

An important aim of the invention is therefore to increase the number of analyses that can be carried out with a single plate.

Another aim of the invention is to enable acceleration of the process for making the analyses.

A still further aim of the invention is to devise a radiological unit, adapted to carry out reading of said plates, which has a reduced bulkiness and cost.

The technical task mentioned and the aims specified are achieved by a radiological unit as claimed in the appended Claim 1.

Preferred embodiments are highlighted in the sub-claims.

The features and advantages of the invention are hereinafter clarified by the detailed description of a preferred embodiment of the invention, with reference to the accompanying drawings, in which:
Fig. 1 shows a view of the radiological unit taken along section I-I;
Fig. 2 shows the second section II-II of the unit according to the invention; and
Fig. 3 shows a detail of the unit.

With reference to the mentioned figures, the radiological unit according to the invention is generally identified with reference numeral **1**.

It preferably is in the form of a right parallelepiped having a rectangular base and sizes of the base surface almost coincident with those of a known radiographic cassette, i.e. it has a width and a length almost identical with those of the radiographic cassettes presently on the market.

In particular, unit 1 is therefore adapted to be accommodated in the housings normally provided in beds presently used for execution of radiographic examinations.

Unit 1 comprises a plate **2**, that will be exposed to obtain the diagnostic image and a holding structure **3** adapted to at least partly receive said plate 2. In particular, the holding structure 3 contains the whole plate 2.

Plate 2 has the same physico-chemical features as those known and appears to be of a flat rectangular shape; plate 2 is therefore adapted to be exposed to a beam of photons emitted from anyone of the sources normally used in radiographic analyses.

In particular, plate 2 is an "imaging plate" known by itself and the photon beams consist of X-rays.

The previously described prismatic shape of unit 1 is advantageously obtained in the following manner: plate 2 represents the major base of said parallelepiped while the holding structure 3 constitutes the rest of the structure.

Therefore the plate-structure coupling defines an inner volume in which a reading apparatus 4 is disposed, which is adapted to detect the diagnostic image obtained from exposure of plate 2, and an actuating unit 5 adapted to move said apparatus 4.

In particular, the actuating unit 5 preferably comprises at least one guide **6** and a translation motor **7** adapted to set apparatus **4** in motion, through a suitable kinematic mechanism, along the guide 6 in an advancing direction **5a** substantially parallel to plate 2 in such a manner that apparatus **4** is suitable to slide over the whole length of plate 2, i.e. the whole size of plate 2 in the direction 5a.

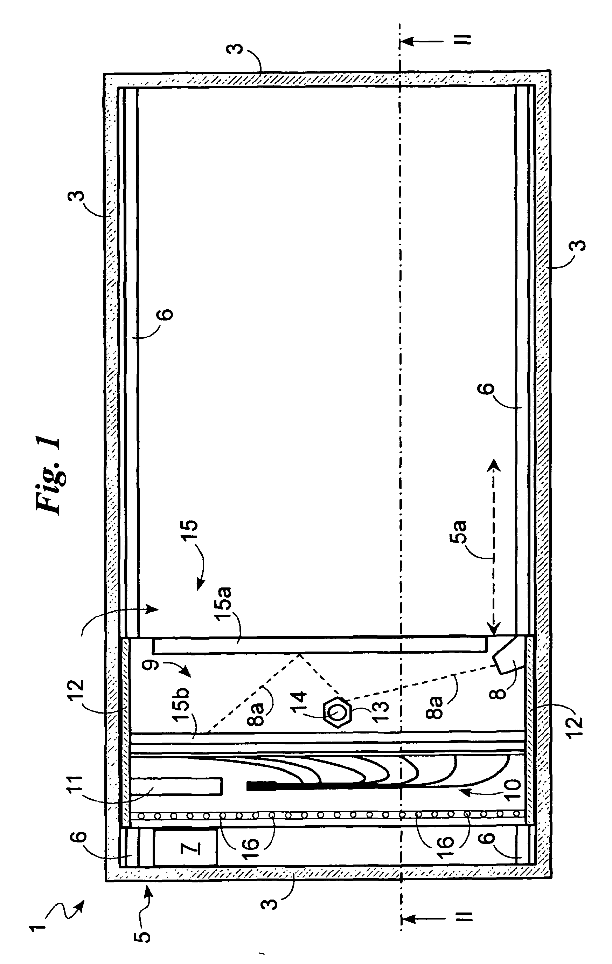

In particular, guides 6 are two in number and are preferably placed laterally of said apparatus **4**, as shown in Fig. **1**.

In addition, said kinematic mechanism, not shown in the figures, can consist of belts or other mechanism enabling unit 5 to move apparatus 4 over the whole length of plate 2.

The reading apparatus 4 comprises a light source **8** adapted to emit a light beam suitable to excite plate 2, an addressing mechanism **9**, suitable to direct said light beam against plate 2, a collecting body **10** adapted to collect the particles produced by plate 2 when struck by the light beam, a reading unit **11** suitable to analyse the particles collected by body 10.

Furthermore, apparatus 4 can advantageously include a carriage **12** preferably of rectangular shape, onto which said elements are secured and suitably connected to the guides 6.

In particular, the light source 8 is adapted to emit a laser beam **8a**, in the following referred to as laser, the frequency of which is of such a nature as to enable excitation of the particles constituting plate 2.

In more detail, laser 8a can be advantageously a red laser that is adapted to enable production of blue light, i.e. blue photons, by plate 2 when the laser itself strikes on the plate, as hereinafter explained in more detail.

The source 8 is advantageously disposed in the vicinity of an angle of carriage 12 and addressed in such a manner that laser 8e comes out following a direction almost parallel to plate 2 and strikes mechanism 9.

The addressing mechanism 9 comprises a reflecting element **13**, secured to carriage 12 in a weak manner, and a rotation motor **14**, preferably of the electric type, adapted to set in rotation element 13 along an axis **13a** substantially perpendicular to plate 2.

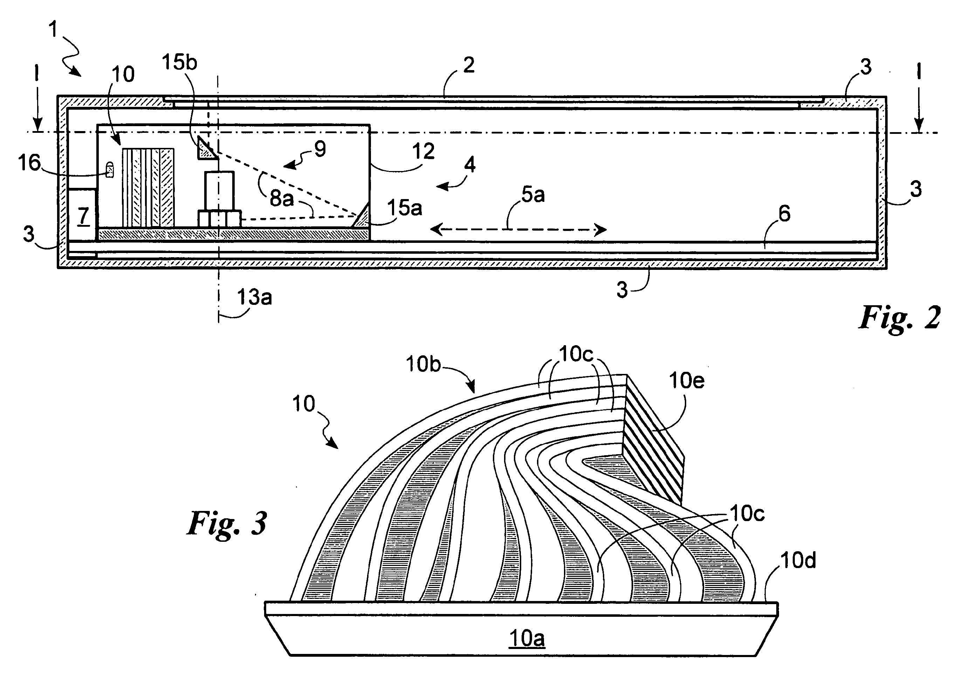

The reflecting element 13 is a right prism with a polygonal base and side surfaces adapted to reflect laser 8a, in particular the base is a polygon with sides equal to each other; in addition, the rotation motor 14 is advantageous disposed over the reflecting element 13, as shown in Fig. 2.

In addition, element 13 is struck by laser 8a which preferably comes out in a direction lying in a plane almost parallel to plate 2 and has an inclination, relative to direction 5a, varying as a function of the rotation of the reflecting element 13.

In particular, the element 13 is therefore struck by laser 8a along one of the side faces thereof and reflected according to a reflection angle substantially equivalent to the angle of incidence.

To conclude, during rotation of element 13 the angle of incidence of laser 8a on the element itself varies and therefore the direction of laser 8a coming out of element 13 is modified enabling laser 8a to strike plate 2 almost over the whole width thereof, i.e. over the whole extension of plate 2 according to the perpendicular to direction 5a.

Finally, it is important to point out that at each rotation, laser 8a travels over the whole width of plate 2 a number of times corresponding to the number of said faces of the reflecting element 13.

In order to limit the variation in length of the path of laser 8a it is necessary to reduce the maximum inclination of laser 8a during operation of unit 1; therefore, the addressing mechanism 9 can advantageously comprise at least one mirror **15** adapted to reflect and orient laser 8a, which mirror is suitably secured to carriage 12.

In particular, mechanism 9 comprises two mirrors 15 which are preferably disposed in the following manner, also depicted in Figs. 1 and 2.

The first mirror **15a** is disposed in front of element 13 and is adapted to reflect laser 8a coming out of element 13 in an inclined direction relative to plate 2.

The second mirror **15b** is placed at a higher position relative to the first mirror 15a and, in particular, close to the reflecting element 13. It is struck by laser 8a coming from the first mirror 15a and addresses said laser against plate 2.

In particular, the second mirror 15b is such arranged that laser 8a comes out of mirror 15b in a vertical direction and therefore strikes plate 2 in a direction substantially perpendicular to the plate itself.

Due to this arrangement of mirrors 15, it is possible to limit the maximum angle of incidence of the laser itself on the reflecting element 13, necessary for striking the plate 2 over the whole width thereof.

In fact, due to mirrors 15, the travel covered by laser 8a before reaching plate 2 is increased and therefore said maximum angle of incidence is reduced. To better clarify this concept it is sufficient to think of a triangle, an isosceles triangle for example, and how the summit angle varies as a function of height, the base length being the same.

Advantageously disposed in the vicinity of the plate 2 portion struck by laser 8a is the collecting body 10 which is adapted to intercept the particles that are produced when laser 8a strikes plate 2. In particular, the body 10 is adapted to intercept the blue photons and is placed in such a manner that it is close to said plate portion immediately after said portion has been struck by laser 8a. In more detail, the body 10 is substantially in contact with plate 2.

The body 10 shown in Fig. 3 comprises two components: an interception one **10a**, adapted to pick up said particles and a transition one **10b** adapted to bring said particles close to the reading unit 11.

The interception component 10a is preferably of prismatic shape and has the upper face **10d**, i.e. that close to plate 2, parallel to the plate itself, of rectangular shape, and the sizes of which are able to cover plate 2 almost over the whole width thereof.

Said geometry and the substantial vicinity between component 10 and plate 2 surely enable the particles produced by contact between laser 8a and plate 2 to perpendicularly hit the interception component 10a ensuring entry of same into the body 10; in particular, said particles enter through an entry surface consisting of the upper face 10d.

The transition component 10b is made up of a plurality of laminae **10c** having a rectangular base and a suitably shaped profile, which laminae are adapted to enable the particles collected by the interception component 10a to slide inside them.

This effect is obtained by virtue of the particular profile of the transition component 10b enabling the presence of an angle of incidence between particles and walls of laminae 10c greater than the critical angle, i.e. the minimum angle required for having the full reflection of the particles, based on the known phenomenon also exploited in optical fibres.

In addition, laminae 10c have the first bases integral with a side face of the interception component 10a, while the second bases are suitably gathered and placed in the vicinity of the reading unit 11 and define the exit surface 10e through which the particles come out of collector 10.

Finally, in order to ensure a correct analysis, the exit surface 10e is substantially equivalent to the upper surface 10d of the collecting body or collector 10. Furthermore, the exit surface 10e is advantageously almost perpendicular to the upper surface 10d.

Preferably, the collecting body 10 is made of one piece construction and of polymethylmethacrylate, PMMA, or other similar material transparent to the blue light, i.e. adapted to be passed through by blue photons without said photons being submitted to energy loss.

The reading unit 11 therefore collects the particles and transmits the collected data to a computer or other system capable of supplying a graphic representation of same.

This unit 11 is preferably a photomultiplier tube or other similar device adapted to amplify the input signal connected with said particles, so as to ensure a high analysis quality.

Finally, the device comprises at least one LED **16** adapted to erase the image previously formed on the plate 2 exposed to the X-rays, enabling the plate 2 itself to be used again. In particular, these LEDs 16 are disposed on the reading apparatus 4. In greater detail, LEDs 16 are disposed over the whole width of plate 2, as shown in Fig. 1.

Operation of the radiological unit 1 described above as regards structure is the following.

Unit 1 is previously disposed in the housings usually provided in beds used for radiographic examinations.

The patient is disposed on the bed with the body portion to be analysed disposed in such a manner that it is coincident with the radiological unit 1. Then the machinery is activated and it emits a photon beam, such as X-rays for example that, after passing through the patient's body, expose the plate 2.

At this point the patient can be moved away and the radiological unit 1 is activated.

In particular, the translation motor 7 sets in motion apparatus 4 along the direction 5a, and simultaneously the developing apparatus 4 is activated.

Then laser 8a comes out of source 8, strikes the reflecting element 13 driven in rotation by the rotation motor **14** and is therefore deviated against mirrors 15.

In particular, rotation of element 13, also due to mirrors 15, allows laser 8a to strike on plate 2 over the whole width therefore, while motion of apparatus 4 ensures that laser 8a will be incident on the whole length of plate 2.

In conclusion, by virtue of the combination of the motion of the reflecting element 13 and the motion of carriage 12, laser 8a is adapted to substantially strike the whole plate 2. Therefore plate 2, excited by laser 8a, based on the known luminescence phenomenon, emits photons that are collected by body 10.

In greater detail, laser 2 strikes a portion of plate 2, then due to moving forward of carriage 12, the body 10 reaches a position under said portion immediately after it has been hit by laser 8a.

The blue photons enter the collecting body 10 through the upper surface 10d, pass through said body and come out through the exit surface 10e reaching the reading unit 11.

The data thus collected by unit 11 are transmitted through a suitable connection, data and provide an image of the initially radiated body portion.

Moreover, after laser 8a has struck plate 2, said plate is cleaned by the LEDs 16, i.e. the image formed by exposure is removed, and plate 2 is therefore ready for a new use.

The invention allows important advantages to be reached.

In fact, the radiological unit 1 allows the analysis process to be accelerated, as it is no longer necessary to handle unit 1 and remove plate 2 from said unit 1.

A further advantage resides in that plate 2 is not handled and therefore the risk of scratches and deterioration of same is eliminated.

Consequently unit 1 allows a longer lifetime to be ensured to plate 2 and therefore enables the same plate 2 to be used for a greater number of analyses.

This possibility reduces the cost of the analysis and allows plates 2 and radiological techniques to be employed that could not be used before, due to their high costs.

A further important advantage is represented by the limited cost and construction simplicity of the radiological unit 1.

## Claims

1. A radiological unit (1) adapted to be used for radiographic examinations during exposure and placed close to a patient's portion to be examined, said unit (1) comprising: a plate (2) adapted to be exposed to a photon beam when said plate (2) is disposed in said unit (1); and a holding structure (3) adapted to at least partly house said plate (2), a reading apparatus (4) adapted to develop said plate (2) and disposed inside said structure (3) and comprising a light source (8) adapted to emit a laser beam or laser (8a), an addressing mechanism (9) adapted to orient said light beam onto said plate (2), a collecting body (10) adapted to collect the particles produced by said plate when struck by said light beam, a reading unit (11) adapted to analyse said particles; **characterised in that** said collecting element (10) comprises an upper face (10d) placed in the vicinity of the portion of the plate (2) struck by said laser (8a) and is adapted to enable entry therein of the particles produced when said laser (8a) strikes said plate (2), through said upper surface (10d), and to cause said particles to come out through an exit surface (10e). substantially perpendicular to said upper face (10d); **in that** said addressing mechanism (9) comprises a reflecting element (13) suitable to reflect and orient said laser (8a) in a plane parallel to said plate (2); **in that** said reflecting element (13) is a right prism with a polygonal base and side surfaces adapted to reflect said laser (8a); and **in that** said reflecting element (13) is adapted to rotate varying the angle of incidence of said laser (8a) on said reflecting element (13) and the direction of said laser (8a) coming out of said reflecting element (13).

2. A unit (1) as claimed in claim 1, comprising an actuating device (5) adapted to move said reading apparatus (4) in a translation direction (5a) parallel to said plate (2).

3. A unit (1) as claimed in one or more of the preceding claims, wherein said reading apparatus (4) comprises a carriage (12) adapted to at least partly contain said components and to be moved by said actuating device (5).

4. A unit (1) as claimed in one or more of the preceding claims, wherein said laser (8a) is a red laser adapted to excite said plate (2) that will consequently produce blue photons.

5. A unit (1) as claimed in claim 1, wherein said reflecting element (13) is adapted to rotate about an axis (13a) substantially perpendicular to said plate (2).

6. A unit (1) as claimed in one or more of claims 1 and 5, wherein said addressing mechanism (9) comprises at least one mirror (15) adapted to deviate said laser (8a) to a plane striking on said plate (2).

7. A unit (1) as claimed in claim 6, wherein said mirrors (15) are two in number.

8. A unit (1) as claimed in claim 7, wherein said collecting element (10) is made of polymethylmethacrylate.

9. A unit (1) as claimed in claim 8, wherein said entry surface is substantially equivalent to said exit surface.

10. A unit (1) as claimed in one or more of claims 8-9, wherein said collecting body (10) consists of a plurality of laminae (10c) suitable to carry said particles at the inside thereof, so that said particles are adapted to pass from said upper surface (10d) to said exit surface (10e).

## Patentansprüche

1. Radiologisches Gerät (1), das geeignet ist, bei Röntgenuntersuchungen während der Bestrahlung eingesetzt und auf einem zu untersuchenden Körperteil des Patienten positioniert zu werden, wobei dieses Gerät (1) Folgendes umfasst: eine Platte (2), die geeignet ist, einem Photonenstrahl ausgesetzt zu werden, wenn die genannten Platte (2) in dem genannten Gerät (1) untergebracht ist; und eine Haltestruktur (3), die geeignet ist, die genannte Platte (2) zumindest teilweise zu umgeben, eine Lesegerät (4), das geeignet ist, die genannte Platte (2) zu entwickeln und in der genannten Struktur (3) untergebracht ist und eine Lichtquelle (8) umfasst, die geeignet ist, einen Laserstrahl oder Laser (8a) abzugeben, einen Steuermechanismus (9), der geeignet ist, den genannten Lichtstrahl auf die genannte Platte (2) zu richten, eine Aufnahmevorrichtung (10), die geeignet ist, die von der genannten Platte erzeugten Partikel aufzunehmen, wenn diese von dem genannten Lichtstrahl getroffen wird, ein Lesegerät (11), das geeignet ist, die genannten Partikel zu analysieren, **dadurch gekennzeichnet, dass** das genannte Aufnahmeelement (10) eine obere Fläche (10d) umfasst, die sich in der Nähe des Plattenteils befindet (2), der von dem genannten Laser (8a) getroffen wird und geeignet ist, das Eintreten der erzeugten Partikel in sein Inneres zu gestatten, wenn der genannten Laser (8a) die genannte Platte (2) über die genannte obere Fläche (10d) trifft und die genannten Partikel über eine Austrittsfläche (10e) austreten zu lassen, die im Wesentlichen senkrecht zur genannten oberen Fläche (10d) ist; dadurch, dass der genannte Steuermechanismus (9) ein reflektierendes Element (13) umfasst, das geeignet ist, den genannten Laser (8a) in einer Ebene parallel zu der genannten Platte (2) auszurichten; dadurch, dass es sich bei diesem reflektierenden Element (13) um ein rechtwinkliges Prisma mit einer polygonalen Basis und Seitenflächen handelt, die in der Lage sind, den genannten Laser (8a) zu reflektieren; und dadurch, dass das genannte reflektierende Element (13) geeignet ist, sich zu drehen und dabei den Einfallwinkel des genannten Lasers (8a) auf dem genannten reflektierenden Element (13) und die Richtung des genannten Lasers (8a) im Ausgang aus dem genannten reflektierenden Element (13) zu ändern.

2. Gerät (1) nach Anspruch 1, das eine Bewegungsvorrichtung (5) umfasst, die geeignet ist, das genannte Lesegerät (4) in paralleler Verschiebungsrichtung (5a) zu der genannten Platte (2) zu bewegen.

3. Gerät (1) nach einem oder mehreren der vorangegangenen Ansprüche, bei dem das Lesegerät (4) einen Wagen (12) umfasst, der geeignet ist, die genannten Komponenten zumindest teilweise aufzunehmen und durch die genannte Bewegungsvorrichtung (5) bewegt zu werden.

4. Gerät (1) nach einem oder mehreren der vorangegangenen Ansprüche, bei dem es sich beim dem genannten Laser (8a) um einen roten Laser handelt, der geeignet ist, die genannte Platte (2) zu erregen, die folglich blaue Photonen erzeugt.

5. Gerät (1) nach Anspruch 1, bei dem das genannte reflektierende Element (13) geeignet ist, um eine Achse (13a) zu drehen, die im Wesentlichen senkrecht zu der genannten Platte (2) ist.

6. Gerät (1) nach einem oder mehreren der Ansprüche 1 und 5, bei dem der genannte Steuermechanismus (9) mindestens einen Spiegel (15) umfasst, der geeignet ist, den genannten Laser (8a) in eine Ebene abzulenken, die die genannte Platte (2) schneidet.

7. Gerät (1) nach Anspruch 6, bei dem die genannten Spiegel (15) zwei umfassen.

8. Gerät (1) nach Anspruch 7, bei dem das genannte Aufnahmeelement (10) aus Polymethylacrylat hergestellt ist.

9. Gerät (1) nach Anspruch 8, bei dem die genannte Eintrittsfläche im Wesentlichen der genannten Austrittsfläche entspricht.

10. Gerät (1) nach einem oder mehreren der vorangegangenen Ansprüche 8-9, bei dem die genannte Aufnahmevorrichtung (10) eine Vielzahl von Lamellen (10c) umfasst, die geeignet sind, die genannten Partikel in ihr Inneres zu befördern, die so geeignet sind, von der genannten oberen Fläche (10d) auf die genannte Austrittsfläche (10e) übertragen zu werden.

## Revendications

1. Dispositif radiologique (1) apte à être utilisé pour des examens radiologiques en phase d'impressionnement et placé au niveau d'une partie de patient à examiner, ledit dispositif (1) comprenant : une plaque (2) apte à être impressionnée par un faisceau de photons lorsque ladite plaque (2) est placée dans ledit dispositif (1) ; et une structure de confinement (3) apte à loger au moins partiellement ladite plaque (2), un appareil de lecture (4) apte à développer ladite plaque (2) et placé à l'intérieur de ladite structure (3) et comprenant une source lumineuse (8) apte à émettre un rayon laser ou laser (8a), un mécanisme d'orientation (9), apte à orienter ledit faisceau lumineux sur ladite plaque (2), un corps collecteur (10), apte à collecter les particules produites par ladite plaque lorsqu'elle est frappée par ledit faisceau lumineux, une unité de lecture (11), apte à analyser lesdites particules, **caractérisé en ce que** ledit élément collecteur (10) comprend une face supérieure (10d) placée à proximité de la partie de plaque (2) frappée par ledit laser (8a) et est apte à permettre l'entrée à son intérieur des particules produites lorsque ledit laser (8a) frappe ladite plaque (2), à travers ladite surface supérieure (10d) et à faire sortir lesdites particules à travers une surface de sortie (10e), fondamentalement perpendiculaire à ladite surface supérieure (10d) ; **en ce que** ledit mécanisme d'orientation (9) comprend un élément réfléchissant (13) apte à réfléchir et orienter ledit laser (8a) sur un plan parallèle à ladite plaque (2) ; **en ce que** ledit élément réfléchissant (13) est un prisme droit avec une base polygonale et avec des surfaces latérales aptes à réfléchir ledit laser (8a) ; et **en ce que** ledit élément réfléchissant (13) et apte à tourner en variant l'angle d'incidence dudit laser (8a) sur ledit élément réfléchissant (13) et la direction dudit laser (8a) sortant dudit élément réfléchissant (13).

2. Dispositif (1) selon la revendication 1, comprenant un dispositif d'actionnement (5) apte à mettre en mouvement ledit appareil de lecture (4) en direction de translation (5a) parallèle à ladite plaque (2).

3. Dispositif (1) selon une ou plusieurs des revendications précédentes, dans lequel ledit appareil de lecture (4) comprenant un chariot (12) apte à contenir au moins partiellement lesdits composants et à être mis en mouvement par ledit dispositif d'actionnement (5).

4. Dispositif (1) selon une ou plusieurs des revendications précédentes, dans lequel ledit laser (8a) est un laser rouge apte à exciter ladite plaque (2) qui, en conséquence produit des photons bleus.

5. Dispositif (1) selon la revendication 1, dans lequel ledit élément réfléchissant (13) est apte à tourner autour d'un axe (13a) fondamentalement perpendiculaire à ladite plaque (2).

6. Dispositif (1) selon une ou plusieurs des revendications 1 et 5, dans lequel ledit mécanisme d'orientation (9) comprend au moins un miroir (15) apte à dévier ledit laser (8a) sur un plan incident ladite plaque (2).

7. Dispositif (1) selon la revendication 6, dans lequel lesdits miroirs (15) sont au nombre de deux.

8. Dispositif (1) selon la revendication 7, dans lequel ledit élément collecteur (10) est réalisé en polyméthylméthacrylate.

9. Dispositif (1) selon la revendication 8, dans lequel ladite surface d'entrée est fondamentalement équivalente à ladite surface de sortie.

10. Dispositif (1) selon une ou plusieurs des revendications 8-9, dans lequel ledit corps collecteur (10) consiste en une pluralité de lames (10c) aptes à transporter à leur intérieur lesdites particules lesquelles sont ainsi aptes à passer de ladite surface supérieure (10d) à ladite surface de sortie (10e).
